(19) Europäisches Patentamt
European Patent Office
Office européen des brevets

(11) EP 3 309 239 A1

(12) EUROPEAN PATENT APPLICATION

(43) Date of publication:
**18.04.2018 Bulletin 2018/16**

(51) Int Cl.:
***C10G 3/00*** (2006.01) ***B01J 21/18*** (2006.01)
***B01J 27/043*** (2006.01) ***B01J 27/047*** (2006.01)

(21) Application number: **16193349.4**

(22) Date of filing: **11.10.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Shell Internationale Research Maatschappij B.V.**
**2596 HR The Hague (NL)**

(72) Inventors:
- **COUMANS, Alessandro Emmanuele**
**5612AE Eindhoven (NL)**
- **HENSEN, Emiel Jan Maria**
**5612AE Eindhoven (NL)**

(74) Representative: **Shell Legal Services IP**
**p/a Carel van Bylandtlaan 16**
**2596 HR Den Haag (NL)**

# (54) PROCESS FOR THE PREPARATION OF HYDROCARBONS FROM A VEGETABLE FEEDSTOCK

(57) The present invention relates to a hydrodeoxygenation process wherein activated carbon is used as support material for catalysts comprising sulfided Ni and sulfided Mo or W as hydrogenation component. The catalyst in this process shows stable activity over a prolonged period of time, while the process further shows selectivity for the "direct hydrodeoxygenation" pathway selectively producing $C_n$ paraffinic hydrocarbons over $C_{n-1}$ paraffinic hydrocarbons.

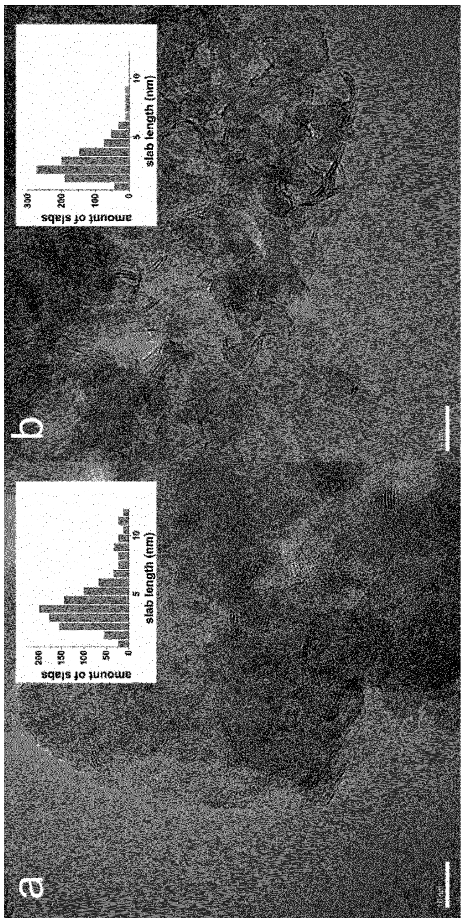


Fig. 1

EP 3 309 239 A1

## Description

### Field of the Invention

The invention provides a hydrodeoxygenation process for producing paraffinic hydrocarbons boiling in the diesel range from a vegetable feedstock using a sulfided NiMo or NiW catalyst on a specific support. Further, the invention relates to the use of said catalyst for selectively producing $C_n$ hydrocarbons over $C_{n-1}$ hydrocarbons.

### Background of the Invention

Environmental concerns about global warming and the finite nature of fossil reserves are the main drivers for the search of alternative renewable liquid fuels. While the overall energy mix continues to diversify, biofuels will remain the main option for aviation, long-distance road transport, and rail where it cannot be electrified.

The global context for biofuels is changing little as a result of the recent oil price collapse, as biofuel consumption remains largely mandate-driven and will rise accordingly. Such mandates often relate to political choices, for instance by the European Union to build a biobased economy in which biofuels play a central role.

First-generation biofuels are manufactured from edible biomass such as starch-rich or oily plants. Important examples are bio-ethanol obtained by fermentation of sugars and diesel obtained by upgrading of triglycerides. On the other hand, second- and third-generation biofuels derive from non-edible biomass such as woody biomass and waste streams and algae.

It is known that paraffinic hydrocarbons boiling in the diesel range may be produced from triglyceride-comprising feedstocks from biological origin such as vegetable oil, animal fat or fish oil. Vegetable oils and animal fats are so-called first-generation biomass feedstock. Two important routes have been developed to convert triglycerides into transportation fuels. Biodiesel consists of fatty acid methyl esters (FAMEs) obtained by base- or acid-catalyzed transesterification of vegetable oils with alcohols. These reactions do not involve deoxygenation of the feedstock. FAMEs are unstable on storage and may also cause problems when used in combustion engines. This limits the amount of biodiesel that can be blended in diesel fuel. An alternative approach involves the direct hydrodeoxygenation (HDO) of triglycerides into hydrocarbons. In US 4,992,605 for example is disclosed a process for producing hydrocarbon products in the diesel boiling range, mainly C15-C18 straight chain paraffins, from vegetable oils or some fatty acids. Cobalt-molybdenum and nickel-molybdenum hydroprocessing catalysts are mentioned as suitable catalysts.

Usually, diesel resulting from HDO is called green diesel or renewable diesel to distinguish it from "biodiesel". Compared with biodiesel, green diesel is compatible with existing combustion engines and has better fuel properties because of its higher cetane number, higher energy density and very low sulfur content. It is also possible to obtain lighter hydrocarbons for the jet or gasoline fuel pool by using catalysts with strong acid sites. Upgrading of this feedstock can either be done by hydroprocessing of the triglycerides only, or by co-feeding triglycerides in petroleum-derived vacuum gas oil upgrading processes. The latter has been explored to limited degree, while the former appears to be the preferred option in currently technology for upgrading of triglycerides. For instance, the UOP/ENI Ecofining process involves hydrotreating followed by isomerization. Neste Oil operates chemical plants in The Netherlands and Singapore that convert palm oil and waste animal fat into green diesel by hydrotreating. The resulting fuel is not a substitute of fossil fuels, but it is blended with fossil-derived transportation fuels to boost their properties.

During triglycerides conversion, the catalyst determines to a large extent the yield and product distribution. Many types of catalysts have been explored for direct hydrotreating of triglycerides, and they are usually comprised of conventional hydrotreating catalysts or zeolites used in petroleum refining. Zeolites in combination with metal sulfide or noble metal hydrogenation functions facilitate hydrocracking, which is preferred when a boiling point shift to gasoline-range hydrocarbons is targeted.

It is known in the art that HDO of triglycerides is preferably done with metal sulfide catalysts. These catalysts generally consist of Co- and Ni-promoted $MoS_2$ supported on gamma-alumina. Recently, it has been found that alumina-supported NiMo sulfide slowly deactivates during methyl oleate HDO and significant build-up of carbonaceous species on the catalyst surface was observed (A.E. Coumans et al., Appl.Catal. B Environ. (2016)).

The aim of the present invention is to find an HDO process which provides an improvement over the processes described in the prior art.

### Summary of the invention

It has now been found that when activated carbon is used as support material for catalysts comprising sulfided Ni and sulfided Mo or W as hydrogenation component, the catalyst shows stable activity over a prolonged period of time, while the process further shows selectivity for the "direct hydrodeoxygenation" pathway selectively producing $C_n$ paraffinic hydrocarbons over $C_{n-1}$ paraffinic hydrocarbons.

Accordingly, the present invention relates to a hydrodeoxygenation process for producing paraffinic hydrocarbons boiling in the diesel range, the process comprising contacting hydrogen and a vegetable feedstock comprising triglycerides, diglycerides, monoglycerides and/or fatty acids with a supported catalyst comprising sulfided Ni and sulfided Mo or W as hydrogenation component, wherein the catalyst support comprises activated carbon.
Further, the invention relates to the use of a supported catalyst comprising sulfided Ni and sulfided Mo or W as hydrogenation component in a process for selectively producing $C_n$ paraffinic hydrocarbons over $C_{n-1}$ paraffinic hydrocarbons boiling in the diesel range, the process comprising contacting the catalyst with hydrogen and a vegetable feedstock comprising triglycerides, diglycerides, monoglycerides and/or fatty acids, wherein the catalyst support comprises activated carbon.
Important advantages of the process according to the present invention are the improved conversion to renewable diesel components, while producing less of the gaseous side product CO, and the improved stability (i.e. less deactivation) of the catalyst when compared to prior art processes.

Detailed description of the invention

According to the present invention activated carbon is used as support material for the catalyst in HDO processes. Catalytic deoxygenation of triglycerides and fatty acids to hydrocarbons over carbon-supported nickel has been reported (E. Santillan-Jimenez et al., Fuel. 103 (2013) 1010-1017), however it is mentioned that catalyst deactivation represents a concern with respect to the viability of Ni-containing catalysts in these applications. In contrast, according to the present invention it was found that catalysts comprising sulfided Ni and sulfided Mo (or sulfided W) as hydrogenation component on activated carbon as support material show more stable activity over a prolonged period of time than comparative catalysts with different support materials. Thus, as an aspect of the invention, activated carbon was found to be an excellent and robust support material for use in catalysts in the conversion of vegetable oils, mono-, di- and triglycerides.
In addition to the prolonged catalyst stability, it was found that by performing the presently claimed HDO process catalyst, the conversion of the feedstock can selectively be steered to the "direct hydrodeoxygenation" pathway. Scheme 1 shows a proposed reaction scheme for the hydrodeoxygenation of glyceride methyl esters (see A.E. Coumans et al., Appl. Catal. B Environ. (2016)). The methyl ester can be converted into a hydrocarbon product by two competing pathways: it can either be hydrolyzed to the fatty acid and further converted into the "$C_{n-1}$" product ("decarbonation" pathway) or be hydrogenated to the fatty alcohol and further converted into the longer "$C_n$" product ("direct hydrodeoxygenation" pathway). High selectivity for the "$C_n$" product over the "$C_{n-1}$" product (i.e. $C_n/C_{n-1} > 1$) is desirable not only as a higher value diesel product, but also because the CO by-product obtained in the "$C_{n-1}$" formation by the decarbonylation pathway consumes hydrogen in its conversion to methane. In the notation $C_n$ and $C_{n-1}$ n herein denotes the highest number of carbon atoms that can be obtained from a certain glyceride in
Preferably, the feedstock comprises triglycerides, more preferably at least 40 wt% triglycerides, even more preferably at least 60 wt%. Suitably, the feedstock comprises vegetable oil, animal fat or fish oil to provide for the triglycerides. Preferably, the feedstock is a vegetable oil, animal fat or fish oil. Mixtures of the vegetable oils, animal fats, fish oils, and mixtures which include vegetable oil, animal fat and/or fish oil may be used. Preferably, the vegetable oil, animal fat or fish oil is in anhydrous or refined form. The oil or fat may contain free fatty acids and/or mono-esters of fatty acids (monoglycerides) and other compounds that naturally occur in the oil or fat, for example carotenoids, phosphatides, terpenes, sterols, fatty alcohols, tocopherols, polyisoprene, carbohydrates and proteins. Suitable vegetable oils include rapeseed oil, palm oil, coconut oil, corn oil, soy oil, safflower oil, sunflower oil, linseed oil, olive oil and peanut oil. Suitable animal fats include pork lard, beef fat, mutton fat and chicken fat. Particularly preferred feedstocks are rapeseed oil and palm oil, in particular palm oil. It has been found that particularly the use of palm oil results in good cold flow properties of the paraffinic hydrocarbons obtained.
The feedstock may be subjected to a prehydrogenation step prior to the present hydrodeoxygenation process for saturation of double bonds in the fatty acid chains of the glycerides and free fatty acids. Prehydrogenation will reduce side reactions of the double bonds such as polymerisation, ring formation and aromatisation. In such prehydrogenation step, the feedstock is contacted in the presence of hydrogen with a hydrogenation catalyst, typically under milder conditions than the hydrodeoxygenation conditions of the present process. The prehydrogenation catalyst may be any hydrogenation catalyst known in the art, preferably a catalyst comprising sulphided Ni or Co and sulphided W or Mo.
Hydrodeoxygenation conditions for glyceride- and fatty acid-containing feedstocks are known in the art. Typically, the hydrodeoxygenation temperature in the present process is in the range of from 230 to 340 °C, preferably of from 250 to 320 °C. Reference herein to the hydrodeoxygenation temperature is to the maximum temperature that is occurring in hydrodeoxygenation step.
The ratio of hydrogen-to-feed supplied to the catalyst in the process of this invention is typically in the range of from 200 to 10,000 normal litres (NL), i.e. litres at standard conditions of T and p (0 °C and 1 atm.) per kilogram feed, preferably of from 500 to 8,000 NL/kg, more preferably of from 1,000 to 5,000 NL/kg. Reference herein to feed is to the

total of feedstock and diluent, i.e. to the total of feedstock and product recycle in case the feedstock is diluted with a product recycle stream.

The feed is typically supplied to the catalyst of at a weight hourly space velocity (WHSV) in the range of from 0.1 to 10 kg feed per litre catalyst per hour, preferably of from 1.0 to 9.0 kg/L.hr, more preferable of from 2.0 to 8.0 kg/L.hr.

Preferably, the glyceride- and/or free fatty acid-containing feedstock that is supplied to the catalyst is preheated to a temperature of at most 320 °C. Above 320 °C, thermal degradation may occur.

The total pressure in the hydrodeoxygenation process of the invention is preferably in the range of from 10 to 140 bar (absolute), more preferably of from 15 to 120 bar (absolute), even more preferable of from 20 to 80 bar (absolute).

The catalyst carrier (support) comprises activated carbon in an amount of 20 to 100%, suitably at least 40%, preferably at least 50%, even more preferred at least 60% and especially at least 80%.

The carrier may further comprise a refractory oxide, preferably alumina, amorphous silica alumina, titania or silica. The carrier may also comprise a zeolitic compound, if some isomerization activity is desired. Any acidic zeolitic compound having hydroisomerizing activity may suitably be used. Such zeolitic compounds are known in the art. Examples of such zeolitic compounds include, but are not limited to, zeolite Y, zeolite beta, ZSM-5, ZSM-12, ZSM-22, ZSM-23, ZSM-48, SAPO-11, SAPO-41, and ferrierite.

The catalyst may be sulfided in-situ or ex-situ. In the case of in-situ sulfiding, a sulfur source, usually hydrogen sulfide or a hydrogen sulfide precursor (i.e. a compound that easily decomposes into hydrogen sulfide such as for example dimethyl disulfide, di-tert-nonyl polysulfide or di-tert-butyl polysulfide), is typically supplied to the catalyst during operation of the process. The sulfur source may be supplied with the feedstock, the hydrogen or separately. Preferably at least 1,500 ppmw hydrogen sulfide or an amount of a hydrogen sulfide precursor that is equivalent to at least 1,500 ppmw hydrogen sulphide, based on the weight of hydrogen supplied, is supplied to the catalyst, more preferably at least 5,000 ppmw, even more preferably at least 10,000 ppmw.

In the process of the invention, catalysts used comprise sulfided Ni, and sulfided Mo or sulfided W as hydrogenation component on activated carbon as support material. Preferably, the catalyst comprise sulfided Mo as hydrogenation component. The catalyst may also comprise sulfided Ni, W and Mo (sulfided NiMoW catalyst).

## Description of the drawings

Scheme 1. Mechanism of the hydrodeoxygenation of a glyceride methyl ester. Shown are the two main pathways: Direct hydrodeoxygenation (HDO) and Decarbonation (DC).

Fig.1. Representative TEM micrographs of sulfided (a) $NiMo/SiO_2$ and (b) $NiMo/Al_2O_3$ (catalysts were sulfided at 15 bar in a 10 vol% $H_2S$ in $H_2$ flow whilst heating at a rate of 2 °C/min to 400 °C with a dwell of 2 h). The inserts show the slab length distribution.

Fig.2. XPS spectra of sulfided NiMo catalysts. All catalyst were sulfided in 15 bar 10 vol% $H_2S$ in $H_2$ whilst heating at a rate of 2 °C/min to 400 °C with a dwell of 2 h. Representative fits for $NiMo/Al_2O_3$ are shown.

Fig.3. First-order HDO reaction rate constant (a) and (b) selectivity towards C18 for sulfided (●) NiMo/C, (○) $NiMo/SiO_2$, (▲) NiMo/ASA, and (□) $NiMo/Al_2O_3$. The lines are meant to guide the eye. Reactions were performed at 260 °C and a pressure of 30 bar using methyl oleate as the feedstock in hydrogen at a gas-to-oil ratio of 10,320 $Nl.kg^{-1}.h^{-1}$. The feed contained 2,000 ppm $H_2S$.

Fig. 4. Yield of stearyl stearate upon time on stream. Shown are sulfided (•) NiMo/C, (○) $NiMo/SiO_2$, (▲) NiMo/ASA, and (□) $NiMo/Al_2O_3$. The lines are meant to guide the eyes. Reactions were performed at 260 °C, 30 bar, using methyl oleate as a feedstock and gas-to-oil ratio of 10,320 Nl.kg-1.h-1. 2,000 ppm $H_2S$ was co-fed.

The invention is illustrated by the following nonlimiting examples.

## Examples

*Experimental methods*

### Materials

Methyl oleate (ABCR) was used as received. Gas chromatography analysis showed that three isomers of octadecenoic methyl ester made up 86 wt% of the feedstock. About 4 wt% C18 methyl esters with two unsaturated C-C bonds (methyl linoleate) and three unsaturated C-C bonds (methyl linoleneate) were observed. In total, six isomers of these compounds were detected. The remainder of the methyl oleate feed was 10 wt% of methyl palmitate, which is a C16 methyl ester.

**Catalyst preparation**

A set of supported NiMo-NTA (NTA = nitrilotriacetic acid) catalysts was prepared by pore volume impregnation. The ASA support was prepared by homogeneous deposition-precipitation of $Al^{3+}$ on silica (~5 wt% $Al_2O_3$ on $SiO_2$) followed by calcination (E.J.M. Hensen et al., J.Catal. 269(2010)201-218). The acidic properties of the used ASA have been reported elsewhere (E.J.M. Hensen et al., J.Phys.Chem.C.114 (2010) 8363-8374). Gamma-alumina (Ketjen CK-300), silica (Shell) and activated carbon (NORIT RX-3 extra) were used as received. The textural properties of all support materials are collected in Table 1.

Table 1

Properties of the prepared catalysts.

| Sample | Support | | | Metal loading | |
|---|---|---|---|---|---|
| | Supplier | Surface area[a] | Pore volume (ml/g)[b] | Mo loading (wt%)[c] | Ni/Mo (-) |
| NiMo/C (invention) | Norit RX3-Extra | 1190 | 1.00 | 6.70 | 0.31 |
| NiMo/$SiO_2$ (comparative) | Shell | 260 | 1.25 | 6.26 | 0.30 |
| NiMo/ASA (comparative) | Home-made | 289 | 1.75 | 5.29 | 0.30 |
| NiMo/$Al_2O_3$ (comparative) | Ketjen CK300 | 183 | 0.66 | 6.45 | 0.29 |

[a] as determined by $N_2$ physisorption;
[b] incipient wetness volume by water;
[c] ICP-OES.

Prior to impregnation, a sieved fraction of these materials (125-250 μm) was dried overnight at 110 °C. For NiMo-NTA catalysts, the impregnation solution contained the chelating agent nitrilotriacetic acid (VWR, 99% purity), ammonium heptamolybdate (Merck, 99% purity) and nickel nitrate (VWR, 99% purity) in concentrations to obtain a final Mo loading of 8 wt% and an atomic Ni/Mo ratio of 0.3. The molar NTA to Mo ratio was 1.2 (J.A.R. van Veen et al., J.Chem.Soc.,Chem.(1987) 1684-1686). The catalysts were dried at room temperature for 1 h, dried overnight at 110 °C. They were grinded and sieved to obtain particles with sizes between 125 μm and 250 μm. The Mo loading and the Ni/Mo atomic ratio of were determined by ICP-OES elemental analysis (Spectro CIROS CCD spectrometer, samples dissolved in 1/1/1 volume mixture of $HF/HNO_3/H_2O$).

**Catalyst characterization**

For the purpose of characterization, the freshly sulfided catalysts, sulfidation-only runs were carried out without a pre-bed and SiC diluent, so that the catalyst could be retrieved in a form amenable to further surface analyses.

Sulfidation was performed in the same manner as preceding a HDO test *(vide infra)*. The catalysts were removed from the reactors inside a nitrogen-flushed glove box. The samples were stored in the glove box before further characterization.

For X-ray Photoelectron Spectroscopy (XPS) analysis, a specially designed transfer holder was used to take the well-crushed sample from the nitrogen-filled glove box to the XPS apparatus without exposure to air. The XPS measurements were carried out on a Thermo Scientific K-Alpha, equipped with a monochromatic small-spot X-ray source and a 180° double focusing hemispherical analyser with a 128-channel detector. Spectra were obtained using an aluminium anode (Al Kα = 1486.6 eV) operating at 72 W and a spot size of 400 μm. Survey scans were measured at a constant pass energy of 200 eV and region scans at 50 eV. The background pressure was $2\times10^{-9}$ mbar. During measurement this was $3\times10^{-7}$ mbar Ar because of the charge compensation dual beam source. Energy correction was performed by using the C 1s peak of adventitious carbon at 284.8 eV as a reference. The resulting spectra were fitted using CasaXPS.

Accurate determination of the dispersion and stacking degree requires that the spent catalyst is transferred from the reactor to the electron microscope without exposure to air (P.J. Kooyman et al., Catal. Today. 130 (2008) 135-138.). For this purpose, glass ampules were used to transfer the catalysts to the TEM (transition electron microscopy) laboratory at Delft University of Technology. The ampules were then loaded in an Ar-filled glove box and opened. The sample was crushed in n-hexane using a mortar so as to obtain a suspension, which was then dropped on a Cu holey

carbon TEM grid (Quantifoil). The solvent was slowly evaporated at room temperature, after which the TEM grid was placed in a specially designed vacuum transfer TEM holder. The TEM grid was then transported to the TEM avoiding contact to air. TEM measurements were carried out using an FEI Tecnai F20ST/STEM, operated at an accelerating voltage of 200 keV. Images were obtained using a Gatan Ultrascan CCD camera (4k × 4k) in bright-field mode, at a magnification of 440 k×. Per sample, about 50 micrographs were taken. Detailed analysis of these micrographs was carried out by measuring the length and stacking degree using the ImageJ software. In this way, between 500 and 1200 particles were analysed per sample.

**Catalytic activity measurements**

Catalytic hydrodeoxygenation (HDO) activity experiments were carried out in a fixed-bed Hastelloy reactor, which was heated in a three-zone oven. Thermal mass flow controllers were used for the supply of $H_2$ (99.95%, Hoekloos), $H_2S$ and CO gases. The liquid feed was supplied by a Shimadzu LC-20AD pump. All tubing was heated after the point of introduction of the liquid feed into the gas stream to avoid condensation of reactants and products.

The catalyst bed consisted of 0.1 g catalyst mixed with 2.5 g SiC. Before the catalyst bed, a pre-bed was placed consisting of 5 g SiC in order to establish trickle-flow conditions (M.H. Al-Dahhan et al, A Review, Ind. Eng. Chem. Res. 36 (1997) 3292-3314). Prior to reaction, the catalysts were sulfided in a mixture of $H_2S/H_2$ gas (10 vol% $H_2S$ in $H_2$) at a total flow rate of 60 ml/min at a pressure of 15 bar. The samples were heated at a ramp rate of 2 °C /min. The temperature was kept at 400 °C for 2 h. Then, the temperature of the catalyst bed was lowered to 260 °C and the total pressure was increased to 30 bar. The packed bed was then wetted by maintaining a liquid flow rate of 1 ml/min for 15 min. The reaction was started by adding the gases to the feed. The feed consisted of a mixture of 20 wt% methyl oleate in 1,2,3,4-tetrahydronaphthalene (tetralin, ≥ 98%, Merck).

The weight hourly space velocity (WHSV) during methyl oleate HDO measurements was 6.5 $h^{-1}$. The gas-to-oil ratio (GOR) was 10,320 $Nl.kg^{-1}.h^{-1}$ with the gas being composed of $H_2$ containing 2,000 ppm $H_2S$.

The liquid phase of the reactor effluent was analyzed on a Restek MXT-Biodiesel TG column (L = 10 m, $d_i$ = 0.32 mm, $d_f$ = 10 μm) placed in an Interscience FocusGC gas chromatograph equipped with a flame ionization detector. Injection was done by a ROLSI system from a small reservoir placed directly after the reactor outlet.

The HDO conversion was determined based on all reaction products in which oxygen was completely removed:

$$X_{HDO} = \frac{n_{C_{17}} + n_{18}}{n_{C_{17}} + n_{18} + n_{oxy}} \times 100\% \qquad \text{(Eq.1)}$$

Therefore, $X_{HDO}$ involves all deoxygenated products ($n_{C17}$ and $n_{C18}$) and $n_{oxy}$ groups all oxygenated hydrocarbons. Assuming plug flow conditions over the fixed bed and considering the order for the feedstock to be one, as was found previously (A.E. Coumans et al, Appl.Catal.B Environ.(2016)), the first order rate constant can be calculated from the conversion based on the amount of catalyst *(W)* and the molar reactant flow (*F⁰*)(G.F. Froment et al., Chemical reactor analysis and design, 2nd ed., John Wiley & Sons, Inc., Singapore, 1990):

$$k_{HDO} - \frac{-\ln(1 - X_{HDO})F^0}{W} \qquad \text{(Eq. 2)}$$

By using the metal loading and the Mo-edge dispersion derived from HR-TEM analysis *(vide infra)* in the manner described by S. Kasztelan et al. in Appl. Catal. 13 (1984) 127-159, dispersion-corrected rate constants were calculated. We considered the selectivity of particular oxygenated products among all oxygenated compounds including the feedstock, and further distinguished the C17 and C18 selectivity in which olefins and paraffins were grouped:

$$S_{C17} = \frac{n_{C_{17}}}{n_{C_{17}} + n_{C_{18}}} \times 100\% \qquad \text{(Eq. 3)}$$

We also determined the fraction of olefins for both the C17 and the C18 fractions.

**Results and discussion**

Table 1 contains the basic information about the catalysts used in the present study. The activated carbon, an extensively acid-washed material, has a much higher surface area than the oxide supports. The amorphous silica-alumina sample was prepared by homogeneous deposition-precipitation of $Al^{3+}$ on silica followed by calcination at 800 °C (A.E. Coumans et al., Appl. Catal. A Gen. 411-412 (2012) 51-59).

Using activated carbon (invention), silica (comparative), gamma-alumina (comparative) and silica-alumina (comparative) as carrier materials, catalysts were prepared by pore volume impregnation with a solution containing suitable metal precursors and NTA. The Ni/Mo ratios in the catalysts were close to the optimal value of 0.30 (E.J.M. Hensen et al., Appl. Catal. A Gen. 322 (2007) 16-32). The use of NTA as a chelating agent served the goal of minimizing metal support interactions in order to end up with similar NiMo sulfide phases after sulfidation (J.A.R. van Veen et al., A real support effect on the activity of fully sulphided CoMoS for the hydrodesulphurization of thiophene, J. Chem. Soc., Chem. ... (1987) 1684-1686.

We characterized the sulfided catalysts by HR-TEM and XPS. To determine the dispersion and morphology of the active phase, high resolution transition electron microscopy (HR-TEM) was done. Representative transmission electron micrographs of sulfided NiMo/$SiO_2$ and NiMo/$Al_2O_3$ can be seen in Fig. 1.

The images show the $MoS_2$ slabs by their edge planes oriented in line with or slightly tilted from the electron beam. The slabs are present as single slabs as well as in stacks. Fig. 1 also depicts the slab size distribution for these two samples. Parameters describing the $MoS_2$ phase in terms of average particle size and stacking degree were derived from accurate analysis of 500-1200 slabs per sample. The resulting data are summarized in Table 2.

Table 2

HR-TEM analysis and XPS data

| sample | TEM results | | atomic ratios from XPS[d] | | | | | | |
|---|---|---|---|---|---|---|---|---|---|
| | slab length[a] (nm) | stacking[b] (-) | fMo[c] (-) | $Mo^{4+}$ (%) [e] | $Mo^{5+}$ (%) | $Mo^{6+}$ (%) | B.E. $Mo^{4+}$ (eV) | NiS (%) | Ni/Mo (-) |
| NiMo/C (invention) | 2.1 | 2.3 | 0.50 | 82 | 11 | 7.3 | 228.7 | 70 | 0.25 |
| NiMo/$SiO_2$ (comparative) | 3.3 | 2.0 | 0.35 | 77 | 17 | 6.0 | 229.4 | 71 | 0.33 |
| NiMo/ASA (comparative) | 3.2 | 1.7 | 0.36 | 87 | 5.8 | 7.2 | 229.3 | 76 | 0.28 |
| NiMo/$Al_2O_3$ (comparative) | 2.8 | 1.4 | 0.40 | 90 | 0.6 | 10 | 229.1 | 76 | 0.29 |

[a] determined by fitting a log-normal distribution, 95% confidence norm is 0.1 nm;
[b] 95% confidence norm is 0.1 (-);
[c] Mo edge dispersion as determined by the geometrical model of Kasztelan et al. [49];
[d] calculated after correcting intensity with relative sensitivity factors based on Scofield cross-sections;
[e] used as the sulfidation degree;
[f] gas phase thiophene HDS at 350 °C and 1 bar corrected for Mo edge dispersion.

The average length of the $MoS_2$ slabs is around 2-3 nm, in good agreement with reported data (E.J.M. Hensen et al., J. Catal. 199 (2001) 224-235). Sulfided NiMo/$Al_2O_3$ has the highest $MoS_2$ dispersion among the oxide supported catalysts. The $MoS_2$ dispersion of NiMo/$SiO_2$ and NiMo/ASA is only slightly lower. The average stacking degree increases with decreasing metal-support interaction (alumina > ASA > $SiO_2$). Compared with these oxide-supported catalysts, the $MoS_2$ dispersion on activated carbon is considerably higher. At the same time, the stacking degree of the $MoS_2$ phase is higher for NiMo/C than for the other catalysts. The high dispersion is due to the very high surface area of the activated carbon, even though the Mo-precursor will likely only weakly interact with the activated carbon support. Thus, despite the use of NTA as chelating agent, the support considerably affected the final morphology of the active phase and the active phase can be best described as having a mixed type I/II character (E.J.M. Hensen et al, J. Catal. 215 (2003) 353-357) with NiMo/C having the most pronounced type II character. The $MoS_2$ dispersion as determined from the geometrical model of Kasztelan et al. (Appl. Catal. 13 (1984) 127-159) is also given in Table 2.

X-ray photoelectron spectroscopy (XPS) was used to determine differences in the extent of sulfidation of the freshly sulfided catalysts (Fig. 2). The Ni $2p_{3/2}$ spectrum contains contributions of $Ni^{2+}$ in sulfidic and oxidic environment. Shake-up features related to these species are seen at higher binding energies (Kung T. Ng et al., J. Phys. Chem. 80 (1976) 2094-2102). The Mo 3d spectrum is mainly composed of $MoS_2$ ($Mo^{4+}$) with small contributions of Mo-oxysulfides ($Mo^{5+}$) and -oxides ($Mo^{6+}$). The Mo 3d spectra were fitted with three doublets, representing these $Mo^{4+}$, $Mo^{5+}$, and $Mo^{6+}$ contributions (T.A. Patterson et al., J. Phys. Chem. 80 (1976) 1700-1708), and a feature due to S 2s. A representative fit can be seen in Fig. 2. Quantitative data are collected in Table 2. The sulfidation degree, as indicated by the contribution

of $Mo^{4+}$, does not vary significantly among the different catalysts and amounts to 80-90%. There is no systematic trend in the contribution of $Mo^{5+}$ and $Mo^{6+}$ between the various catalysts.

**HDO activity measurements**

All of the sulfided samples were evaluated for their catalytic performance in the HDO of methyl oleate. Methyl oleate HDO was carried out at a temperature of 260 °C and a total pressure of 30 bar. The reaction time was 1 week in order to follow catalyst deactivation. The main HDO reaction products observed during methyl oleate HDO were octadecane, octadecenes, heptadecane and heptadecenes. As reported earlier for sulfided NiMo/$Al_2O_3$ (A.E. Coumans et al., Appl. Catal. B Environ. (2016)), a large part of the methyl oleate reactant is hydrogenated to methyl stearate (octadecanoic methyl ester). In addition, stearic (octadecanoic) acid and oleic (octadecenoic) acid were among the reaction products. Alcohols and aldehydes were not observed by online GC analysis nor by GC analysis of the condensed reactor effluent. From the small amounts of stearyl stearate (octadecyl octadecanoate) detected, we infer that octadecanol is a reaction intermediate. The Brønsted acidity of zeolites can cause hydrocracking reactions of alkanes under typical HDS (G. Busca, Chem. Rev. 107 (2007)) and HDO (H. Zuo et al., Energy and Fuels. 26 (2012) 3747-3755) reaction conditions. This may also happen with acidic amorphous silica-alumina (A.E. Coumans et al., Appl.Catal.A Gen. 411-412 (2012) 51-59). However, we did not observe cracking of the primary C17 and C18 reaction products obtained by methyl oleate HDO, which is most likely due to the relatively low reaction temperature.

Fig. 3a shows the dispersion-corrected pseudo first-order rate constant for the overall HDO reaction of methyl oleate to hydrocarbons as a function of time on stream for the different catalysts. Considerable differences in the overall HDO activity and rate of deactivation are observed. Whereas NiMo/C and NiMo/$SiO_2$ display stable HDO activity, NiMo/$Al_2O_3$ and NiMo/ASA deactivate. Initially, NiMo/$Al_2O_3$ and NiMo/ASA show higher activity than NiMo/C. After one week on stream, NiMo/C is the most active catalyst. Fig. 3b highlights that the support also has a strong effect on the HDO selectivity. The C18 selectivities for NiMo/$Al_2O_3$ and NiMo/ASA are much lower than for NiMo/$SiO_2$ and NiMo/C. High C18 selectivity is desirable, because CO by-product obtained in C17 formation by decarbonylation consumes hydrogen in its conversion to methane.

Oleic acid is the product of methyl oleate hydrolysis (O. Ş enol *et al.,* J. Mol. Catal. A Chem. 268 (2007) 1-8; B. Donnis et al., Top. Catal. 52 (2009) 229-240) and can be hydrogenated to stearic acid. The amount of these intermediate acids was relatively low for all. Stearyl stearate is the product of the esterification of oleic acid with intermediate alcohols. Only (fully hydrogenated) stearyl stearate is observed in the HDO experiments. We observed that the stearyl stearate yield decreased for NiMo/$Al_2O_3$ and NiMo/ASA with time on stream, but remained constant for NiMo/C and NiMo/$SiO_2$ (Fig. 4). It is also seen that at the time scale of the HDO measurements the stearyl stearate yields of NiMo/$Al_2O_3$ and NiMo/ASA approach that of NiMo/$SiO_2$. The corresponding yield for stearyl stearate of NiMo/C is much higher and constant. The higher yield for NiMo/C shows that this catalyst is relatively more active in methyl oleate hydrolysis than NiMo/$SiO_2$.

A significant difference is the much lower C18 hydrocarbons selectivity for NiMo/$Al_2O_3$ and NiMo/ASA as compared with NiMo/$SiO_2$ and NiMo/C. This difference points to a difference in the rate of hydrogenation of the fatty aldehyde to the fatty alcohol. It has been demonstrated that this reaction is more complex than a simple hydrogenation of the aldehyde, instead involving a keto-enol equilibrium (B. Donnis et al., Top. Catal. 52 (2009) 229-240).

**Conclusions**

The influence of the support on the hydrodeoxygenation of methyl oleate by sulfided NiMo was evaluated in a trickle flow reactor. The support materials investigated were activated carbon (invention), silica (comparative), gamma-alumina (comparative) and ASA (comparative). The active phase was loaded by incipient wetness impregnation in the presence of NTA. Sulfidation resulted in nearly similar sulfidation degree (80-90%) for all catalysts. The $MoS_2$ dispersion increased in the order NiMo/$SiO_2$ < NiMo/ASA < NiMo/$Al_2O_3$ < NiMo/C. The stacking degree showed a different trend namely NiMo/$Al_2O_3$ < NiMo/ASA < NiMo/$SiO_2$ < NiMo/C. Despite the use of NTA as chelating agent to suppress metal-support interactions, the support had a significant influence on the morphology of the active phase. In methyl oleate HDO, all catalysts were able to convert the model compound for triglyciderides to C17 and C18 olefins and paraffins. Whilst initially NiMo/$Al_2O_3$ and NiMo/ASA displayed the highest overall HDO activity, these catalysts deactivated during the week on stream. At the end of the run, they had similar activity as NiMo/$SiO_2$. On the other hand, NiMo/C and NiMo/$SiO_2$ did not deactivate. The NiMo/C catalyst (according to the invention) was appreciably more active than the others after prolonged reaction. Also, the NiMo/C support (according to the invention) is more active in methyl oleate hydrolysis. Further, the reaction data show that the C18 hydrocarbons selectivity for NiMo/$SiO_2$ and NiMo/C (according to the invention) is substantially higher than for the other two catalysts. Clearly, the support has a significant influence on the performance of NiMo sulfide in methyl oleate HDO. The use of activated carbon as the support presents high

and stable HDO activity of methyl oleate with good C18 hydrocarbons selectivity. This study suggests the promise of activated carbon as a support for NiMo, and likewise NiW or NiMoW, sulfide catalyzed HDO of vegetable oils, fats and greases into clean diesel.

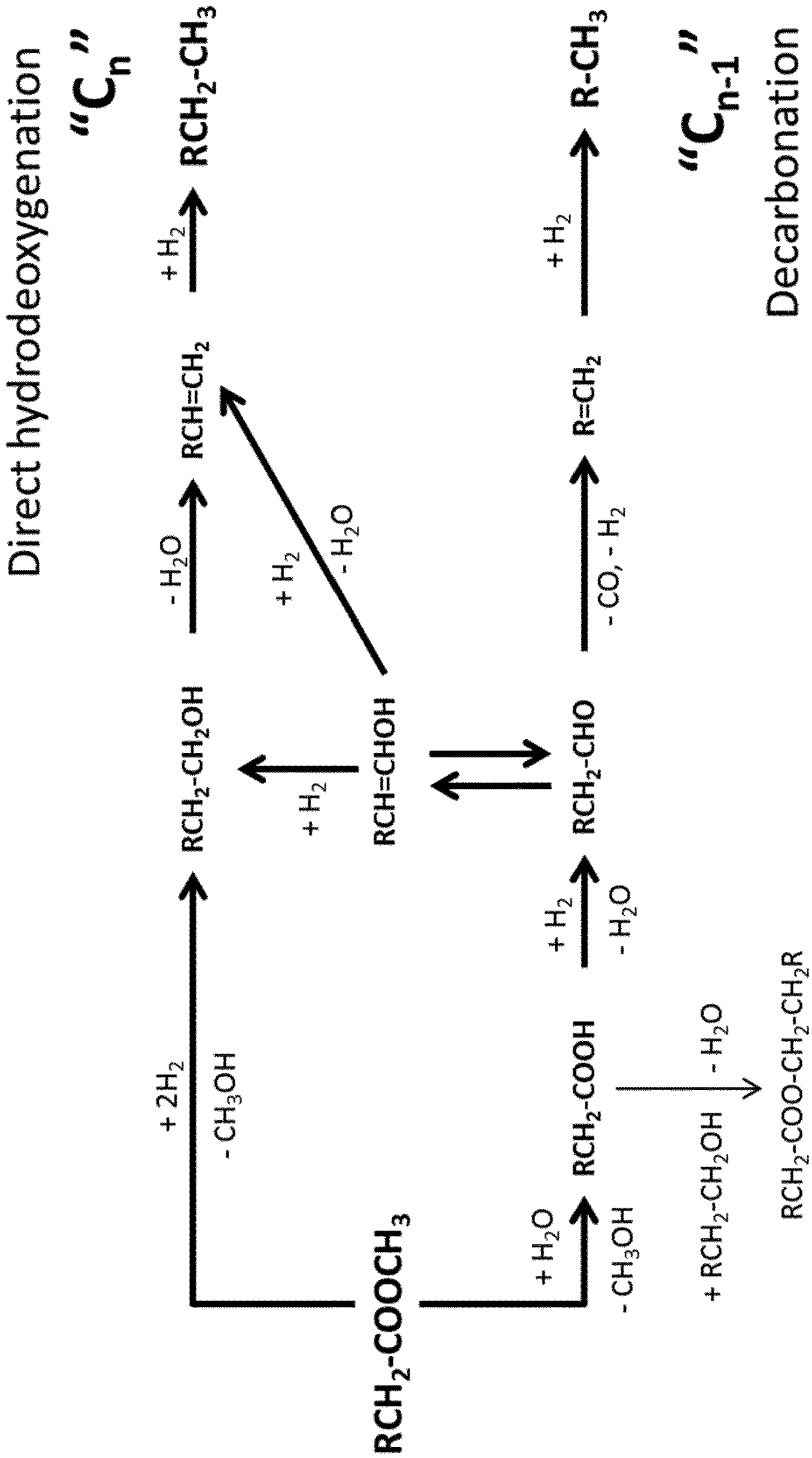


Scheme 1

## Claims

1. A hydrodeoxygenation process for producing paraffinic hydrocarbons boiling in the diesel range, the process comprising contacting hydrogen and a vegetable feedstock comprising triglycerides, diglycerides, monoglycerides and/or fatty acids with a supported catalyst comprising sulfided Ni and sulfided Mo or W as hydrogenation component, wherein the catalyst support comprises activated carbon.

2. The process according to claim 1, wherein the hydrodeoxygenation temperature is in the range of from 230 to 340 °C.

3. The process according to claim 1 or 2, wherein the hydrogen-to-feedstock ratio supplied to the catalyst is typically in the range of from 200 to 10,000 normal litres per kilogram feedstock.

4. The process according to any one of claims 1 - 3, wherein the total pressure in the process in the range of from 10 to 140 bar (absolute).

5. The process according to any one of claims 1 - 4, wherein support comprises activated carbon in an amount of 20 to 100%.

6. The process according to any one of claims 1 - 4, wherein the hydrogenation component is sulfided Mo.

7. Use of a supported catalyst comprising sulfided Ni and sulfided Mo or W as hydrogenation component in a process for selectively producing $C_n$ paraffinic hydrocarbons over $C_{n-1}$ paraffinic hydrocarbons boiling in the diesel range, the process comprising contacting the catalyst with hydrogen and a vegetable feedstock comprising triglycerides, diglycerides, monoglycerides and/or fatty acids, wherein the catalyst support comprises activated carbon.

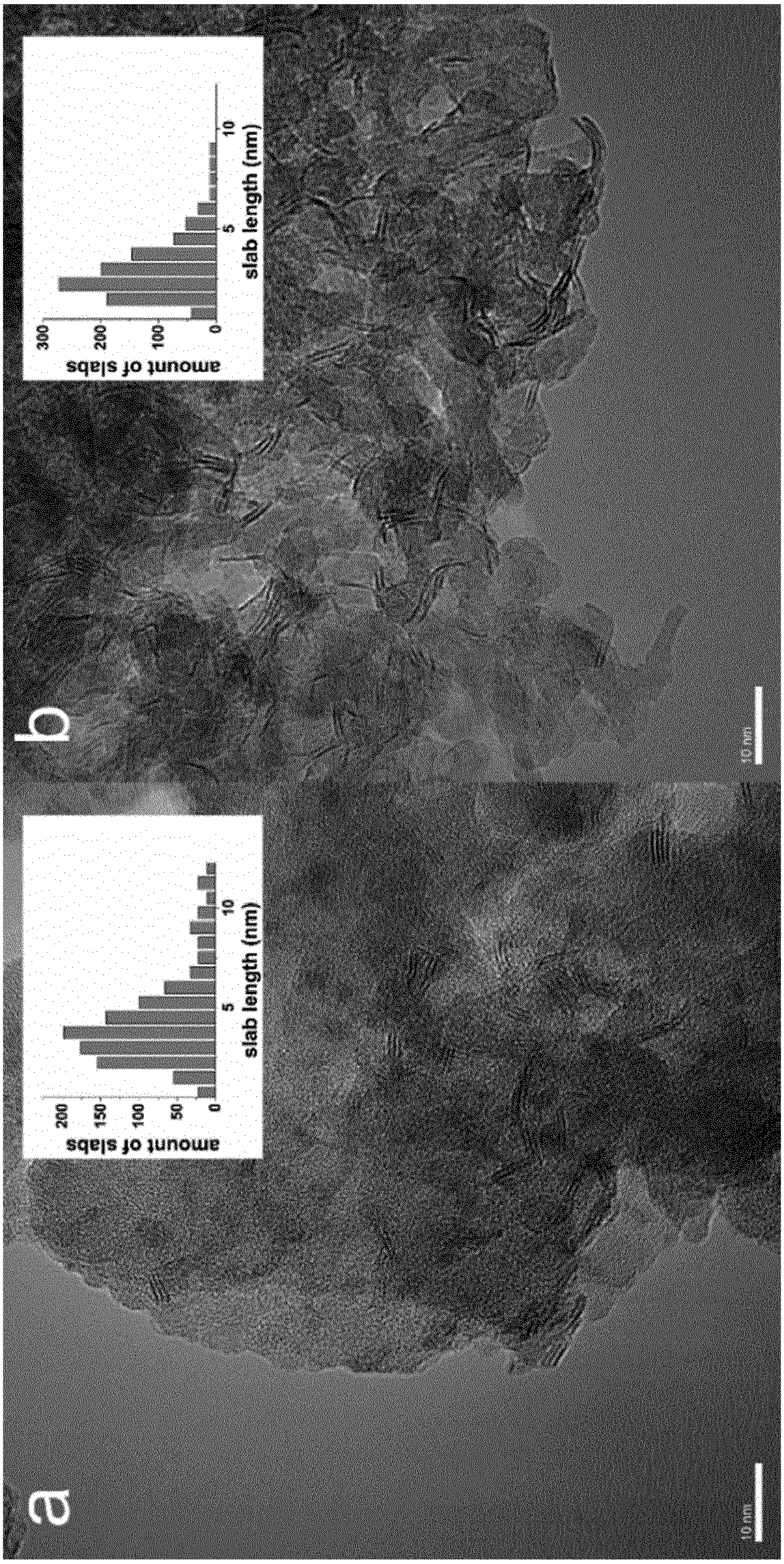


Fig. 1

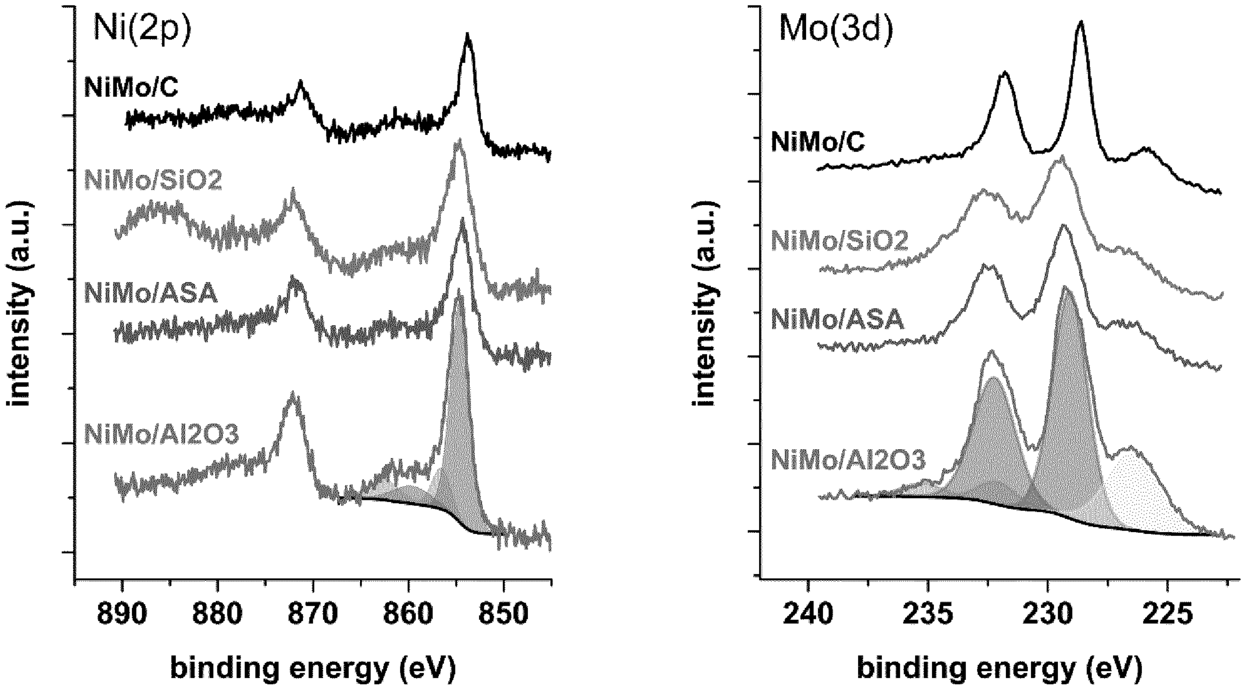
Ni(2p)
NiMo/C
NiMo/SiO2
NiMo/ASA
NiMo/Al2O3
intensity (a.u.)
890
880
870
860
850
binding energy (eV)
Mo(3d)
NiMo/C
NiMo/SiO2
NiMo/ASA
NiMo/Al2O3
intensity (a.u.)
240
235
230
225
binding energy (eV)

Fig. 2

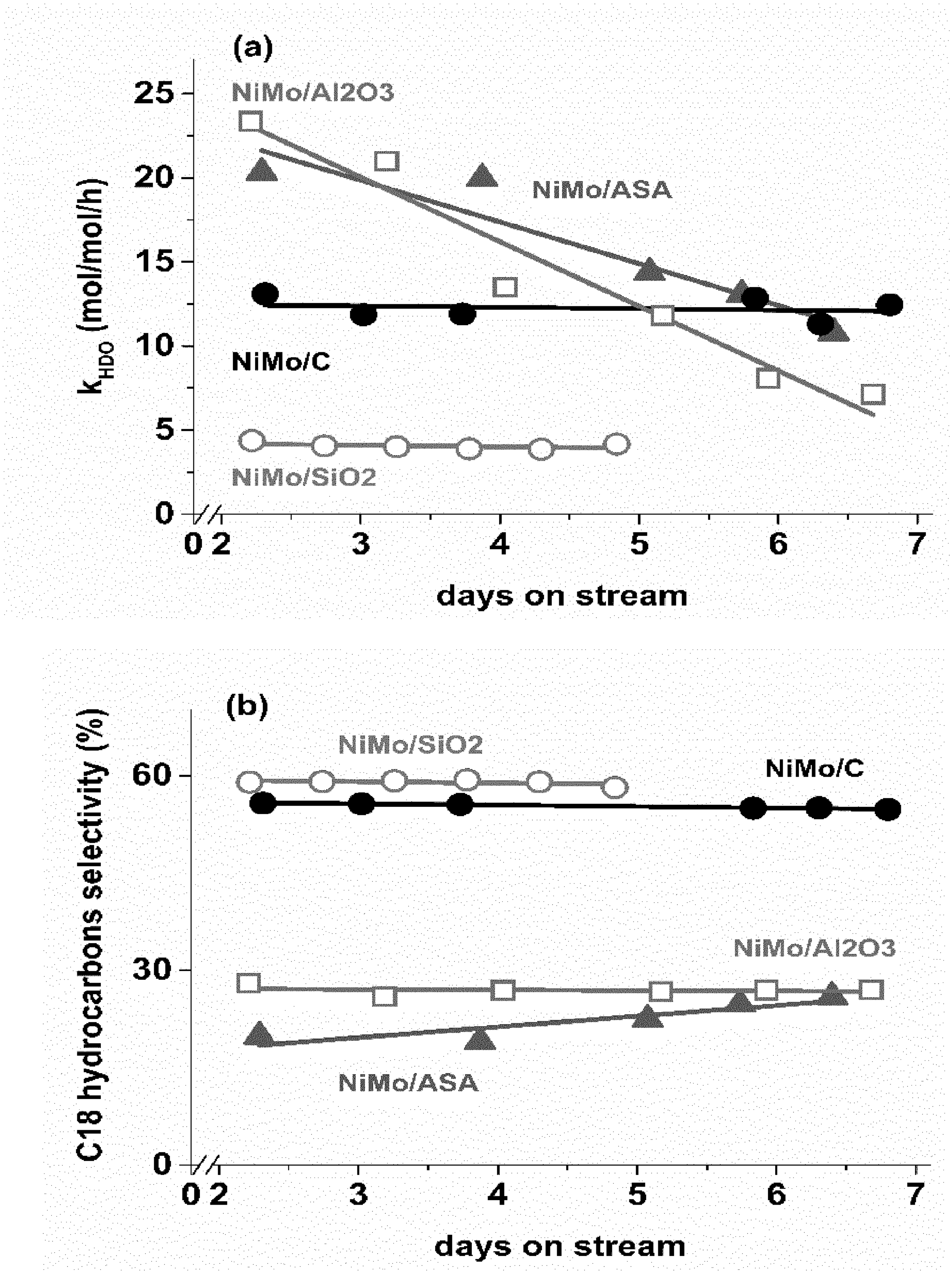
(a)
NiMo/Al2O3
NiMo/ASA
NiMo/C
NiMo/SiO2
$k_{HDO}$ (mol/mol/h)
days on stream
(b)
NiMo/SiO2
NiMo/C
NiMo/Al2O3
NiMo/ASA
C18 hydrocarbons selectivity (%)
days on stream

Fig. 3

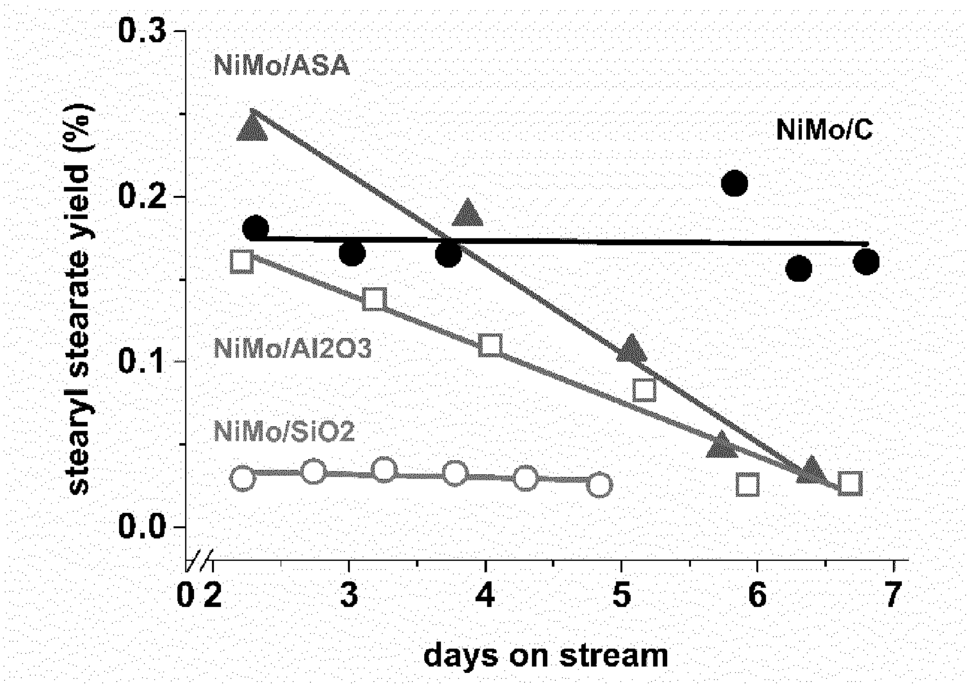
0.3
0.2
0.1
0.0
stearyl stearate yield (%)
NiMo/ASA
NiMo/C
NiMo/Al2O3
NiMo/SiO2
0
2
3
4
5
6
7
days on stream

Fig. 4

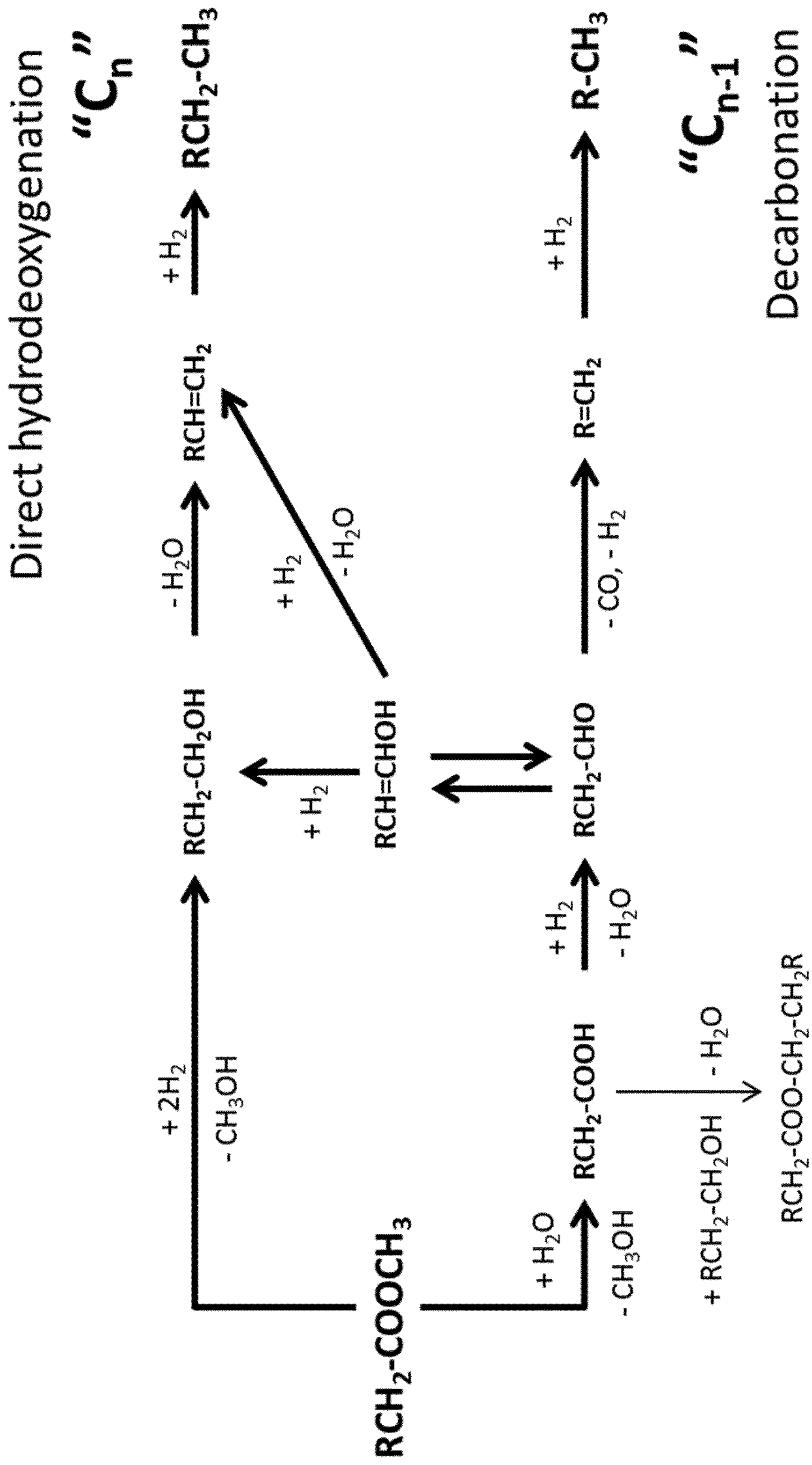
Direct hydrodeoxygenation
"$C_n$"
+ $2H_2$
- $CH_3OH$
+ $H_2$
- $H_2O$
+ $H_2$
- $H_2O$
+ $H_2$
+ $H_2O$
- $CH_3OH$
+ $H_2$
- $H_2O$
- CO, - $H_2$
+ $H_2$
+ $RCH_2$-$CH_2OH$
- $H_2O$
"$C_{n-1}$"
Decarbonation

Scheme 1

Europäisches Patentamt
European Patent Office
Office européen des brevets

# EUROPEAN SEARCH REPORT

Application Number
EP 16 19 3349

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/115398 A1 (RAJESH MUNIASWAMY [IN] ET AL) 28 April 2016 (2016-04-28)<br>* paragraphs [0002], [0031], [0032], [0044] - [0050], [0053] * | 1-7 | INV.<br>C10G3/00<br>B01J21/18<br>B01J27/043<br>B01J27/047 |
| X | US 2016/177188 A1 (VILONEN KATI [FI] ET AL) 23 June 2016 (2016-06-23)<br>* paragraphs [0019], [0025] - [0029], [0031], [0034], [0040], [0054], [0094], [0096] * | 1-7 | |
| X | US 2013/305591 A1 (MCCALL MICHAEL J [US] ET AL) 21 November 2013 (2013-11-21)<br>* paragraphs [0001], [0004], [0021], [0024], [0029] * | 1-7 | |
| A | WO 2016/128617 A1 (NESTE OYJ [FI]) 18 August 2016 (2016-08-18)<br>* page 1, lines 6-8,15-21,22-23 *<br>* page 3, line 24 - line 25 *<br>* page 4, line 22 - line 25 * | 1-7 | TECHNICAL FIELDS SEARCHED (IPC) |
| A | US 9 249 361 B2 (KIM JAEHOON [KR] ET AL) 2 February 2016 (2016-02-02)<br>* column 1, line 17 - line 20 *<br>* column 1, line 65 - column 2, line 7 * | 1-7 | C10G<br>B01J |

The present search report has been drawn up for all claims

1

| Place of search | Date of completion of the search | Examiner |
|---|---|---|
| The Hague | 13 March 2017 | Chau, Thoi Dai |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 16 19 3349

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2017

| Patent document cited in search report | Publication date | Patent family member(s) | Publication date |
|---|---|---|---|
| US 2016115398 A1 | 28-04-2016 | US 2016115398 A1 | 28-04-2016 |
| | | WO 2014087364 A2 | 12-06-2014 |
| US 2016177188 A1 | 23-06-2016 | CA 2915849 A1 | 19-06-2016 |
| | | EP 3050940 A1 | 03-08-2016 |
| | | US 2016177188 A1 | 23-06-2016 |
| US 2013305591 A1 | 21-11-2013 | NONE | |
| WO 2016128617 A1 | 18-08-2016 | NONE | |
| US 9249361 B2 | 02-02-2016 | KR 20140100614 A | 18-08-2014 |
| | | US 2014221706 A1 | 07-08-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4992605 A


### Non-patent literature cited in the description


- **A.E. COUMANS et al.** *Appl.Catal. B Environ.,* 2016
- **E. SANTILLAN-JIMENEZ et al.** *Fuel.,* 2013, vol. 103, 1010-1017
- **A.E. COUMANS et al.** *Appl. Catal. B Environ.,* 2016
- **E.J.M. HENSEN et al.** *J.Catal.,* 2010, vol. 269, 201-218
- **E.J.M. HENSEN et al.** *J.Phys.Chem.C.,* 2010, vol. 114, 8363-8374
- **J.A.R. VAN VEEN et al.** *J.Chem.Soc.,Chem.,* 1987, 1684-1686
- **P.J. KOOYMAN et al.** *Catal. Today.,* 2008, vol. 130, 135-138
- **M.H. AL-DAHHAN et al.** *A Review, Ind. Eng. Chem. Res.,* 1997, vol. 36, 3292-3314
- **A.E. COUMANS et al.** *Appl.Catal.B Environ.,* 2016
- **G.F. FROMENT et al.** Chemical reactor analysis and design. John Wiley & Sons, Inc, 1990
- **S. KASZTELAN et al.** *Appl. Catal.,* 1984, vol. 13, 127-159
- **A.E. COUMANS et al.** *Appl. Catal. A Gen.,* 2012, vol. 411-412, 51-59
- **E.J.M. HENSEN et al.** *Appl. Catal. A Gen.,* 2007, vol. 322, 16-32
- **J.A.R. VAN VEEN et al.** A real support effect on the activity of fully sulphided CoMoS for the hydrodesulphurization of thiophene. *J. Chem. Soc., Chem. ...,* 1987, 1684-1686
- **E.J.M. HENSEN et al.** *J. Catal.,* 2001, vol. 199, 224-235
- **E.J.M. HENSEN et al.** *J. Catal.,* 2003, vol. 215, 353-357
- **KASZTELAN et al.** *Appl. Catal.,* 1984, vol. 13, 127-159
- **KUNG T. NG et al.** *J. Phys. Chem.,* 1976, vol. 80, 2094-2102
- **T.A. PATTERSON et al.** *J. Phys. Chem.,* 1976, vol. 80, 1700-1708
- **G. BUSCA.** *Chem. Rev.,* 2007, vol. 107
- **H. ZUO et al.** *Energy and Fuels.,* 2012, vol. 26, 3747-3755
- **A.E. COUMANS et al.** *Appl.Catal.A Gen.,* 2012, vol. 411-412, 51-59
- *J. Mol. Catal. A Chem.,* 2007, vol. 268, 1-8
- **B. DONNIS et al.** *Top. Catal.,* 2009, vol. 52, 229-240